# EUROPÄISCHE PATENTANMELDUNG

(11) **EP 4 503 286 A2**
(43) Veröffentlichungstag der Anmeldung: **05.02.2025**
(21) Anmeldenummer: 24219181.5
(22) Anmeldetag: 09.11.2023
(51) Int. Cl.: H01M 50/249

(54) **HOCHVOLTBATTERIE MIT BATTERIEGEHÄUSE**

(30) Priorität: 15.12.2022 EP 22213731
(62) Teilanmeldung aus: 23208811.2
(71) Anmelder: MAGNA STEYR Fahrzeugtechnik GmbH & Co KG, 8041 Graz (AT)
(72) Erfinder: NOVOTNY, Jiri, 80995 München (DE)
(74) Vertreter: Zangger, Bernd

(57) **Zusammenfassung**

Ein Kraftfahrzeug mit einer Hochvoltbatterie, umfassend Batteriezellen (1) in einem Batteriegehäuse, wobei das Batteriegehäuse zumindest einen Gehäuseboden (2) und einen Gehäusedeckel (3) umfasst und die Batteriezellen (1) zwischen Gehäuseboden (2) und Gehäusedeckel (3) angeordnet sind, wobei der Gehäuseboden (2) aus einer oder mehreren miteinander gefügten Doppelstegplatten aus Aluminium besteht, wobei eine Doppelstegplatte aus zwei zueinander parallelen ebenen Platten (4) besteht und eine Vielzahl von Stegen (5) in im Wesentlichen regelmäßigen Abständen im Wesentlichen parallel zueinander angeordnet sind, um die zwei Platten (4) zu verbinden, wobei zwei einander gegenüberliegende Seitenwände des Batteriegehäuses durch Querträger (6) des Kraftfahrzeugs gebildet sind, wobei zwei zueinander parallele seitliche Begrenzungen des Gehäusebodens (2) durch Längsträger des Kraftfahrzeugs gebildet sind.

## Beschreibung

### Gebiet der Erfindung

Die vorliegende Erfindung betrifft ein Kraftfahrzeug mit einer Hochvoltbatterie.

### Stand der Technik

Hochvoltbatterie für Kraftfahrzeuge werden heutzutage zunehmend als Antriebsbatterien für Elektro- und Hybridfahrzeuge verwendet. Die Hochvoltbatterien umfassen typischerweise eine Vielzahl von Batteriezellen, die in einem Batteriegehäuse angeordnet sind.

Heute übliche Batteriegehäuse für Hochvoltbatterien sind hoch komplex und bestehen aus zahlreichen Bauteilen, die zueinander sehr genau abgestimmt werden müssen. Die Gestaltung des Innenraums des Batteriegehäuses ist dadurch unflexibel, weil die Zellenblöcke, Befestigungen und Verstärkungsstrukturen auch auf die erwarteten Belastungen und gewünschten Steifigkeiten optimiert werden müssen. Oft erfüllen Bauteile in dem Gehäuse nur eine einzige Funktion. All dies führt zu einem hohen Gewicht der Hochvoltbatterie und verringert den zur Verfügung stehenden Raum für die Zellen.

Aus der WO 2021/110246 A1 ist eine Tragstruktur zur Aufnahme von Batteriezellen in einem Batteriesystem eines Hybrid- oder Elektrofahrzeugs, wobei die Tragstruktur eine Bodenplatte und zwei auf der Bodenplatte angeordnete Seitenplatten umfasst, wobei die Innenseiten der beiden Seitenplatten und der Bodenplatte ein Innenvolumen zur Aufnahme der Batteriezellen definieren und wobei jede Seitenplatte an ihrer Außenseite einen Flansch aufweist und wobei jeder Flansch Befestigungsmittel zum Befestigen der Trägerstruktur an einer benachbarten Trägerstruktur aufweist.

Die WO 2021/110247 A1 offenbart ein Batteriegehäuse zur Aufnahme von Batteriezellen, vorzugsweise zur Verwendung in einem Elektro- oder Hybridfahrzeug, wobei das Batteriegehäuse eine Bodenplatte umfasst, die eine Basis des Gehäuses bildet, wobei die Bodenplatte mit einer anderen Bodenplatte der gleichen Art mittels eines Verbindungssystems verbunden werden kann, um eine modulare Basis des Gehäuses zu bilden.

Aus US 2012/223113 A1 ist ein Batterieträger für ein Fahrzeug bekannt, umfassend einen Rahmen, einen Boden und ein Dach, wobei der Rahmen, der Boden und das Dach ein Gehäuse bilden, das zur Aufnahme von Batterien geeignet ist, wobei der Rahmen ringförmig ist und ein Profil mit einem im Wesentlichen konstanten Querschnitt aufweist, und wobei der Rahmen, der Boden und das Dach drei separate Elemente sind, die aneinander befestigt sind.

### Zusammenfassung der Erfindung

Es ist eine Aufgabe der Erfindung, ein Kraftfahrzeug mit einer Hochvoltbatterie anzugeben, die auf einfache Weise, flexibel an unterschiedliche Anforderungen angepasst werden kann. Die Hochvoltbatterie soll hohe Anforderungen an die mechanische Festigkeit erfüllen und dabei geringes Gewicht aufweisen. Zudem soll die Hochvoltbatterie einen großen Innenraum für Batteriezellen aufweisen und somit eine hohe Kapazität aufweisen.

Die Lösung der Aufgabe erfolgt durch ein Kraftfahrzeug mit einer Hochvoltbatterie gemäß Anspruch 1.

Die Hochvoltbatterie umfasst Batteriezellen in einem Batteriegehäuse, wobei das Batteriegehäuse zumindest einen Gehäuseboden und einen Gehäusedeckel umfasst und die Batteriezellen zwischen Gehäuseboden und Gehäusedeckel angeordnet sind, wobei der Gehäuseboden aus einem oder mehreren miteinander gefügten Doppelstegplatten aus Aluminium besteht, wobei eine Doppelstegplatte aus zwei zueinander parallelen ebenen Platten besteht und eine Vielzahl von Stegen in im Wesentlichen regelmäßigen Abständen im Wesentlichen parallel zueinander angeordnet sind, um die zwei Platten zu verbinden.

Erfindungsgemäß wird somit eine oder mehrere Doppelstegplatten als Boden für ein Batteriegehäuse eingesetzt. Der Stegplattenboden bietet eine steife Konstruktion zur Aufnahme der Batteriezellen und bietet dadurch auch guten mechanische Festigkeit und Schutz, beispielsweise bei einer Pollerüberfahrt. Diese Funktionen sind durch die Ausgestaltung der Stegplatte auf einfache Weise individuell einstellbar, wobei auch Gewicht und Bauraum eingespart wird, da keine zusätzlichen Bauteile nötig sind. Die Steifigkeit und der Pollerüberfahrtschutz können insbesondere durch die Höhe der Stegplattenanordnung sowie die Wandstärke und/oder die Anzahl der Stege zwischen den Stegplatten eingestellt werden.

Die erfindungsgemäße Lösung mit dem Doppelstegplattenboden ist somit flexibel und einfach einstellbar. Das Kernbauteil des Batteriegehäuses ist der Boden, der aus einer oder mehreren gefügten Aluminium-Doppelstegplatten besteht. Der Doppelstegplattenboden ermöglicht hohe Flexibilität, gewichtseffiziente und raumeffiziente Gestaltung des Batteriegehäuses. Der Doppelstegplattenboden kann mehrere Funktionen gleichzeitig erfüllen, insbesondere Entgasungsräume zur Verfügung stellen, einen Unterfahrtschutz ausbilden, und/oder eine Verstärkung beispielsweise für einen Seitencrash. Der Doppelstegplattenboden hat an sich schon hohe Eigensteifigkeit, die durch eine Ergänzung mit zusätzlichen Verstärkungen erhöht werden kann, falls es nötig ist. Das tragende Bauteil ist der Doppelstegplattenboden und die optionalen inneren Verstärkungen ergänzen die Steifigkeit des Bodens. Der Gehäuseboden aus Doppelstegplatten bietet hohe Flexibilität der Gestaltung des Batteriegehäuses, da innere Verstärkungsstrukturen im Gehäuse deutlich reduziert werden können oder komplett entfallen können. Dadurch entsteht mehr Raum für Zellen, die auch flexibler gestaltet werden können.

Das Wort "Vielzahl" für die Stege bedeutet dabei, dass zumindest drei Stege vorhanden sein müssen, so dass es zu "regelmäßigen Abständen" zwischen den Stegen kommen kann, bevorzugt gibt es jedoch mindestens 5, mindestens 10 und besonders bevorzugt mindestens 20 Stege, die die zwei Platten miteinander verbinden.

Erfindungsgemäß sind zwei einander gegenüberliegende Seitenwände des Batteriegehäuses durch Querträger des Kraftfahrzeugs gebildet, insbesondere in Einbaulage im Kraftfahrzeug vorne und hinten liegende Seitenwände des Batteriegehäuses.

Erfindungsgemäß sind zwei zueinander parallele seitliche Begrenzungen des Gehäusebodens durch Längsträger des Kraftfahrzeugs gebildet. Zumindest der Boden, optional auch die ganze Höhe des Batteriegehäuses, kann durch Längsträger des Kraftfahrzeugs begrenzt sein, insbesondere in Einbaulage im Kraftfahrzeug links und rechts liegende Seitenwände des Gehäusebodens und/oder des Batteriegehäuses.

Vorzugsweise sind mehrere Versteifungsleisten und/oder Versteifungsdome und/oder Verbindungselemente zwischen dem Gehäuseboden und dem Gehäusedeckel angeordnet und an dem Gehäuseboden und dem Gehäusedeckel befestigt sind. Versteifungsleisten können im Wesentlichen flächige Bauteile sein, die sich vom Gehäuseboden zum Gehäusedeckel erstrecken. Sie können zueinander parallel angeordnet sein. Sie können in Y-Richtung des Kraftfahrzeugs verlaufen und/oder in der selben Richtung verlaufen, wie die Stege des Gehäusebodens. Anstatt oder zusätzlich zu den flächigen Versteifungsleisten können auch im Wesentlichen säulenförmige Versteifungsdome zur Versteifung zwischen Gehäuseboden und Gehäusedeckel angeordnet sein. Beispielsweise innerhalb von Versteifungsleisten und/oder Versteifungsdomen oder auch davon getrennt können Verbindungselemente, beispielsweise in der Art von Schraubenverbindungen, zwischen Gehäuseboden und Gehäusedeckel eingesetzt sein.

Deckelverstärkungsleisten können am Gehäusedeckel angeordnet sein, insbesondere an der Außenseite des Gehäusedeckels, um den Gehäusedeckel zu versteifen, insbesondere wenn dieser als Karosserieboden dient. Die Deckelverstärkungsleisten sind bevorzugt parallel zu den Versteifungsleisten und/oder an Positionen, die sich mit den Positionen der Versteifungsleisten zumindest teilweise überlappen, angeordnet.

Bevorzugt sind zumindest einige der Stege, bevorzugt alle Stege in zumindest einer Flächenregion der Doppelstegplatte, so ausgebildet, dass Freiräume zwischen dem Steg und derjenigen Platte, die sich an der den Batterie-zellen zugewandten Seite des Gehäusebodens befindet, bestehen, wobei diese Platte Öffnungen aufweist, so dass eine Entgasung der Batteriezellen über die Öffnungen der Platte und die Freiräume zwischen der Platte und dem Steg durch den Gehäuseboden erfolgen kann. Die Freiräume können bevorzugt dadurch ausgebildet sein, dass sich die Stege nicht über die ganze Höhe zwischen den Platten des Gehäusebodens erstrecken. Durch die Freiräume bzw. Hohlräume im Stegplattenboden kann eine Entgasung erfolgen. Da die Entgasung durch die Hohlräume des Stegplattenbodens erfolgt, können die Batteriezellen näher an dem Boden angeordnet sein oder sogar drauf stehen, also mit dem Gehäuseboden in Kontakt sein. Ein Abstand zwischen Zellen und Boden ist nicht erforderlich. Der zur Verfügung stehende Bauraum kann somit besser genutzt werden.

Bevorzugt ist jeweils eine Öffnung derjenigen Platte, die sich an der den Batteriezellen zugewandten Seite des Gehäusebodens befindet, einem Freiraum zwischen dem Steg und dieser Platte zugeordnet. Es gibt somit so viele Freiräume wie Öffnungen in der in Einbaulage oberen Platte.

Gemäß einer Ausführungsform kann zumindest eine Flächenregion der Doppelstegplatte unterschiedlich von zumindest einer anderen Flächenregion der Doppelstegplatte ausgebildet sein, insbesondere dadurch, dass in bestimmten Regionen die Stege der Doppelstegplatte eine unterschiedliche Dichte und/oder unterschiedliche Form und/oder unterschiedliche Höhe aufweisen.

In einem erfindungsgemäßen Kraftfahrzeug mit einer Hochvoltbatterie wie zuvor beschrieben, kann das Batteriegehäuse zwischen zwei Schwellern des Kraftfahrzeugs angeordnet sein. Besonders bevorzugt sind die Schweller oberhalb der Längsträger und seitlich neben dem Batteriegehäuse angeordnet.

Die Stege und/oder die Versteifungsleisten und/oder die Deckelverstärkungsleisten verlaufen vorzugsweise in Y-Richtung des Kraftfahrzeugs.

### Kurzbeschreibung der Zeichnungen

Die Erfindung wird im Folgenden beispielhaft unter Bezugnahme auf die Zeichnungen beschrieben.
- Fig. 1: ist eine schematische seitliche Darstellung eines Gehäusebodens einer erfindungsgemäßen Hochvoltbatterie.
- Fig. 2: ist eine schematische seitliche Darstellung eines Gehäusebodens einer erfindungsgemäßen Hochvoltbatterie in einer anderen Ausführungsform.
- Fig. 3: ist eine dreidimensionale schematische Darstellung einer erfindungsgemäßen Hochvoltbatterie.
- Fig. 4: ist eine schematische seitliche Darstellung einer erfindungsgemäßen Hochvoltbatterie, ohne Batteriezellen.
- Fig. 5: ist eine schematische Darstellung eines Gehäusebodens einer erfindungsgemäßen Hochvoltbatterie in einer weiteren Ausführungsform, von vorne.
- Fig. 6: ist eine dreidimensionale schematische Darstellung des Gehäusebodens gemäß Fig. 5.

### Detaillierte Beschreibung der Erfindung

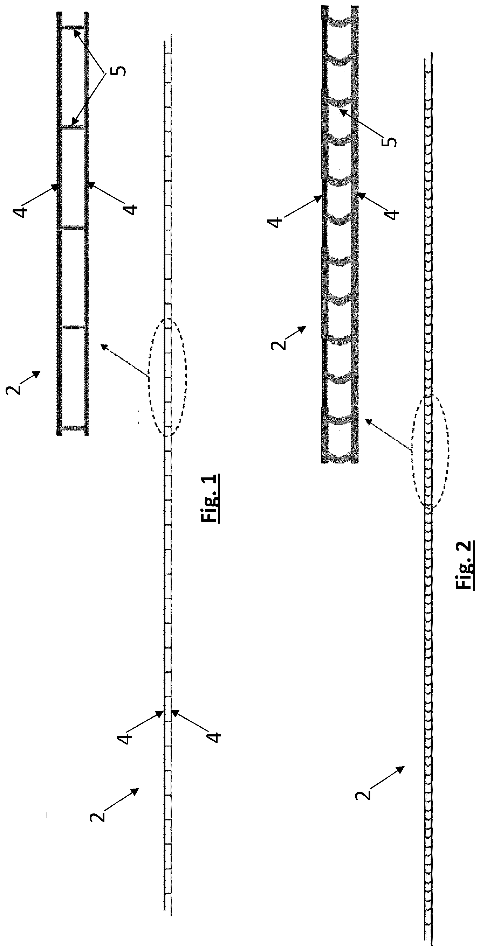

In Fig. 1 ist ein Gehäuseboden 2 einer erfindungsgemäßen Hochvoltbatterie von der Seite betrachtet dargestellt. Rechts oben ist ein Ausschnitt des Gehäusebodens 2 vergrößert dargestellt.

Der Gehäuseboden 2 besteht aus einem oder mehreren miteinander gefügten Doppelstegplatten aus Aluminium, wobei eine Doppelstegplatte aus zwei zueinander parallelen ebenen Platten 4 besteht und eine Vielzahl von Stegen 5 in regelmäßigen Abständen parallel zueinander angeordnet sind, um die zwei Platten 4 zu verbinden.

In Fig. 2 ist eine andere Flächenregion der Doppelstegplatte gemäß Fig. 1 dargestellt, oder eine andere Ausführungsform einer Doppelstegplatte, wobei die Stege 5 unterschiedlich von der Ausführung in Fig. 1 ausgebildet sind. In Fig. 2 weisen die Stege 5 eine Bogenform auf. Möglich sind auch andere Formen, andere Dichten der Stege 5 und/oder andere Höhen der Stege 5, als in einer anderen Flächenregion oder in einer anderen Doppelstegplatte.

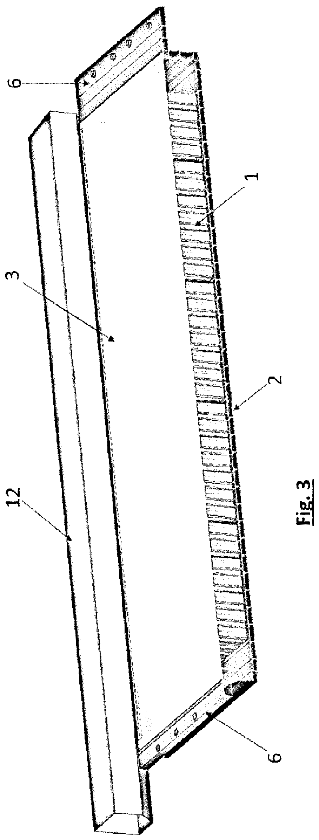

Fig. 3 zeigt eine dreidimensionale schematische Darstellung einer erfindungsgemäßen Hochvoltbatterie. Die Hochvoltbatterie umfasst Batteriezellen 1 in einem Batteriegehäuse, die in Querrichtung, also Y-Richtung des Fahrzeuges angeordnet sein können. Das Batteriegehäuse weist zumindest einen Gehäuseboden 2 und einen Gehäusedeckel 3 auf. Die Batteriezellen 1 sind zwischen Gehäuseboden 2 und Gehäusedeckel 3 angeordnet.

Zwei einander gegenüberliegende Seitenwände des Batteriegehäuses sind durch Querträger 6 des Kraftfahrzeugs gebildet. Diese Querträger 6 können in Fahrzeuglängsrichtung vorne und hinten am Fahrzeug angeordnet sein und in Fahrzeugquerrichtung verlaufen.

Zwei zueinander parallele seitliche Begrenzungen des Gehäusebodens 2 sind durch Längsträger des Kraftfahrzeugs gebildet. Die Längsträger können linke und rechte Begrenzungen des Gehäusebodens 2 bilden und in Fahrzeuglängsrichtung verlaufen.

Das Batteriegehäuse ist zwischen zwei Schwellern 12 des Kraftfahrzeugs angeordnet, wovon in Fig. 3 lediglich ein Schweller dargestellt ist. Die Schweller 12 können oberhalb der Längsträger und seitlich neben dem Batteriegehäuse angeordnet sein.

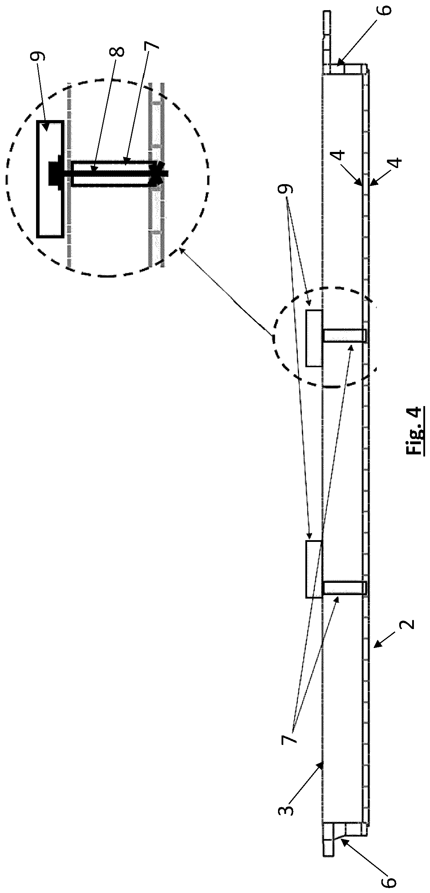

Fig. 4 zeigt eine schematische seitliche Darstellung einer Hochvoltbatterie, wobei die Batteriezellen nicht dargestellt sind. Eine vergrößerte Darstellung eines Ausschnitts ist wieder rechts oben in Fig. 4 dargestellt.

Mehrere im Wesentliche Flächen bildende Versteifungsleisten 7 und/oder im Wesentlichen stiftförmige Versteifungsdome und/oder Verbindungselemente 8 wie etwa Schrauben sind zwischen dem Gehäuseboden 2 und dem Gehäusedeckel 3 angeordnet und an dem Gehäuseboden 2 und dem Gehäusedeckel 3 befestigt. Die Verbindungselemente 8 können in den Versteifungsleisten 7 und/oder Versteifungsdomen angeordnet sein und/oder diese am Gehäuseboden 2 und am Gehäusedeckel 3 befestigen.

Mehrere Deckelverstärkungsleisten 9 sind am Gehäusedeckel 3 angeordnet, parallel zu den Versteifungsleisten 7 und an Positionen, die sich mit den Positionen der Versteifungsleisten 7 zumindest teilweise überlappen.

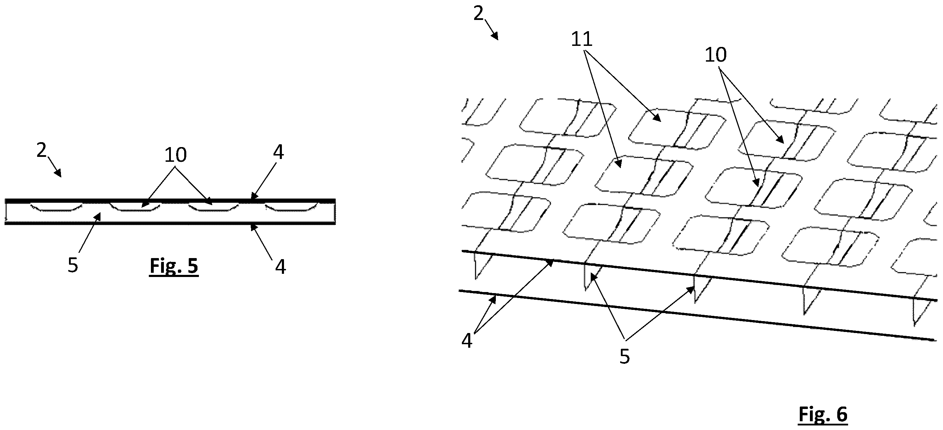

Fig. 5 und Fig. 6 sind schematische Darstellungen eines Gehäusebodens in einer weiteren Ausführungsform.

Dabei sind die dargestellten Stege 5 in zumindest der abgebildeten Flächenregion der Doppelstegplatte, so ausgebildet, dass Freiräume 10 zwischen dem Steg 5 und derjenigen Platte 4, die sich an der den Batteriezellen 1 zugewandten Seite des Gehäusebodens 2 befindet, also hier der oberen Platte 4, bestehen, wobei diese Platte 4 Öffnungen 11 aufweist, so dass eine Entgasung der Batteriezellen 1 über die Öffnungen 11 der Platte 4 und die Freiräume 10 zwischen der Platte 4 und dem Steg 5 durch den Gehäuseboden 2 erfolgen kann.

Eine Öffnung 11 der oben liegenden Platte 4, die sich also an der den Batteriezellen 1 zugewandten Seite des Gehäusebodens 2 befindet, ist einem Freiraum 10 zwischen dem Steg 5 und dieser Platte 4 zugeordnet. In der dargestellten Ausführung gibt es somit gleich viele Öffnungen 11 wie Freiräume 10.

Die Stege 5 und/oder die Versteifungsleisten 7 und/oder die Deckelverstärkungsleisten 9 verlaufen in Y-Richtung des Kraftfahrzeugs.

Zusammengefasst können Hochvoltbatterie mit einem solchen Batteriegehäuse mit Boden aus Doppelstegplatten folgende Vorteile haben:
- hohe Flexibilität der Gestaltung des Batteriegehäuses, insbesondere bezüglich Steifigkeiten und Raumgestaltung, die Steifigkeit des Doppelstegplattenbodens kann flexibel angepasst werden, beispielsweise durch Verdichtung von Rippen also Stegen, durch Wandstärkenerhöhung, die Höhe des Bodens, die Form der Stege zum Beispiel durch Krümmung,
- hohe Flexibilität der Gestaltung des Innenraumes des Batteriegehäuses durch die reduzierten Verstärkungsstrukturen, somit gewichtseffiziente und raumeffiziente Gestaltung des Gehäuses,
- flexible Möglichkeiten der Anbindung an die Karosserie,
- flexible Möglichkeit der Anpassung an die Zellen, zum Beispiel für eine effektive Entgasung der Batteriezellen.

### Bezugszeichenliste

- 1: Batteriezellen
- 2: Gehäuseboden
- 3: Gehäusedeckel
- 4: Platte
- 5: Steg
- 6: Querträger
- 7: Versteifungsleiste
- 8: Verbindungselement
- 9: Deckelverstärkungsleiste
- 10: Freiraum
- 11: Öffnung
- 12: Schweller

## Patentansprüche

1. Kraftfahrzeug mit einer Hochvoltbatterie, umfassend Batteriezellen (1) in einem Batteriegehäuse, wobei das Batteriegehäuse zumindest einen Gehäuseboden (2) und einen Gehäusedeckel (3) umfasst und die Batteriezellen (1) zwischen Gehäuseboden (2) und Gehäusedeckel (3) angeordnet sind,
wobei der Gehäuseboden (2) aus einer oder mehreren miteinander gefügten Doppelstegplatten aus Aluminium besteht, wobei eine Doppelstegplatte aus zwei zueinander parallelen ebenen Platten (4) besteht und eine Vielzahl von Stegen (5) in im Wesentlichen regelmäßigen Abständen im Wesentlichen parallel zueinander angeordnet sind, um die zwei Platten (4) zu verbinden,
**dadurch gekennzeichnet , dass** zwei einander gegenüberliegende Seitenwände des Batteriegehäuses durch Querträger (6) des Kraftfahrzeugs gebildet sind, wobei zwei zueinander parallele seitliche Begrenzungen des Gehäusebodens (2) durch Längsträger des Kraftfahrzeugs gebildet sind.

2. Kraftfahrzeug mit einer Hochvoltbatterie nach Anspruch 1,
**dadurch gekennzeichnet , dass** mehrere Versteifungsleisten (7) und/oder Versteifungsdome und/oder Verbindungselemente (8) zwischen dem Gehäuseboden (2) und dem Gehäusedeckel (3) angeordnet sind und an dem Gehäuseboden (2) und dem Gehäusedeckel (3) befestigt sind.

3. Kraftfahrzeug mit einer Hochvoltbatterie nach zumindest einem der vorhergehenden Ansprüche,
**dadurch gekennzeichnet , dass** mehrere Deckelverstärkungsleisten (9) am Gehäusedeckel (3) angeordnet sind, bevorzugt parallel zu den Versteifungsleisten (7) und/oder an Positionen die sich mit den Positionen der Versteifungsleisten (7) zumindest teilweise überlappen.

4. Kraftfahrzeug mit einer Hochvoltbatterie nach zumindest einem der vorhergehenden Ansprüche,
**dadurch gekennzeichnet , dass** zumindest einige der Stege (5), bevorzugt alle Stege (5) in zumindest einer Flächenregion der Doppelstegplatte, so ausgebildet sind, dass Freiräume (10) zwischen dem Steg (5) und derjenigen Platte (4), die sich an der den Batteriezellen (1) zugewandten Seite des Gehäusebodens (2) befindet, bestehen, wobei diese Platte (4) Öffnungen (11) aufweist, so dass eine Entgasung der Batteriezellen (1) über die Öffnungen (11) der Platte (4) und die Freiräume (10) zwischen der Platte (4) und dem Steg (5) durch den Gehäuseboden (2) erfolgen kann.

5. Kraftfahrzeug mit einer Hochvoltbatterie nach Anspruch 4,
**dadurch gekennzeichnet , dass** jeweils eine Öffnung (11) derjenigen Platte (4), die sich an der den Batteriezellen (1) zugewandten Seite des Gehäusebodens (2) befindet, einem Freiraum (10) zwischen dem Steg (5) und dieser Platte (4) zugeordnet ist.

6. Kraftfahrzeug mit einer Hochvoltbatterie nach zumindest einem der vorhergehenden Ansprüche,
**dadurch gekennzeichnet , dass** zumindest eine Flächenregion der Doppelstegplatte unterschiedlich von zumindest einer anderen Flächenregion der Doppelstegplatte ausgebildet ist, durch eine unterschiedliche Dichte und/oder Form und/oder Höhe der Stege (5).

7. Kraftfahrzeug mit einer Hochvoltbatterie nach zumindest einem der vorhergehenden Ansprüche,
**dadurch gekennzeichnet, dass** das Batteriegehäuse zwischen zwei Schwellern (12) des Kraftfahrzeugs angeordnet ist, wobei bevorzugt die Schweller (12) oberhalb der Längsträger und seitlich neben dem Batteriegehäuse angeordnet sind.

8. Kraftfahrzeug mit einer Hochvoltbatterie nach zumindest einem der Ansprüche 2 oder 3,
**dadurch gekennzeichnet , dass** die Stege (5) und/oder die Versteifungsleisten (7) und/oder die Deckelverstärkungsleisten (9) in Y-Richtung des Kraftfahrzeugs verlaufen.
